(19) Europäisches Patentamt

European Patent Office

Office européen des brevets

(11) Veröffentlichungsnummer: **0 287 712 B1**

(12) **EUROPÄISCHE PATENTSCHRIFT**

(45) Veröffentlichungstag der Patentschrift: **20.05.92**

(21) Anmeldenummer: **87119179.7**

(22) Anmeldetag: **25.02.88**

(51) Int. Cl.⁵: **F23D 5/06**, B60H 1/22

(54) **Verdampfungsbrenner.**

(30) Priorität: **22.04.87 DE 3713460**

(43) Veröffentlichungstag der Anmeldung:
**26.10.88 Patentblatt 88/43**

(45) Bekanntmachung des Hinweises auf die
Patenterteilung:
**20.05.92 Patentblatt 92/21**

(84) Benannte Vertragsstaaten:
**DE FR GB SE**

(56) Entgegenhaltungen:
**DE-A- 1 918 445**
**DE-A- 3 233 321**

(73) Patentinhaber: **Webasto AG Fahrzeugtechnik**
**Kraillinger Strasse 5 Stockdorf**
**W-8035 Gauting 2(DE)**

(72) Erfinder: **Widemann, Friedrich**
**Siegmannstrasse 14**
**W-8000 München 60(DE)**
Erfinder: **Piegsa, Siegfried**
**Leonrodstrasse 48/IV**
**W-8000 München 19(DE)**

**Beschreibung**

Die Erfindung bezieht sich auf einen Verdampfungsbrenner für ein mit flüssigem Brennstoff betriebenes Heizgerät, insbesondere Fahrzeugzusatzheizgerät, gemäß Oberbegriff des Patentanspruchs 1.

Aus DE-A 19 18 445 ist eine Vorrichtung zur Verbrennung von flüssigen Kohlenwasserstoffen, insbesondere als Zusatzheizung für Kraftfahrzeuge, der eingangs genannten Art bekannt. Hierbei ist ein in einer Brennkammer angeordneter Vergasungskörper aus gesintertem rostfreiem Stahl als saugfähiger Körper vorgesehen. Der saugfähige Körper verdampft an seiner gesamten Oberfläche Brennstoff. In eine mit einer Zündeinrichtung ausgestattete einseitig vom Sinterkörper begrenzte Vorkammer verdampft daher während der gesamten Betriebsdauer eine so große Brennstoffmenge, daß nach Zündung und Abschaltung der Zündeinrichtung eine Unterbrechung der von der Vorkammer ausgehenden Zündflamme nicht zuverlässig erreicht wird. Abgesehen von einem insgesamt höheren Brennstoffverbrauch durch die unvollständige Verbrennung in der Vorkammer neigt die Zündeinrichtung bei einer ununterbrochenen Verbrennung in der Vorkammer zur Verkokung und zu vorzeitigem Verschleiß.

Aus DE-PS 32 33 321 ist ein Verdampfungsbrenner bekannt, der eine Brennkammer hat, der ein Brennrohr zugeordnet ist und in der ein mit flüssigem Brennstoff beaufschlagbarer, saugfähiger Körper an einem Träger angeordnet ist, von dem wenigstens ein Teil seiner der Brennkammer zugewendeten Seite freigelegt ist. Über eine Brennluftzufuhreinrichtung wird Brennluft zugeführt, und mittels einer Glühkerze als Zündeinrichtung wird das aus Brennstoff und Brennluft aufbereitete Brenngemisch gezündet und in der Brennkammer verbrannt.

Aus DE-OS 34 23 940 ist ein letzterem ähnlicher Verdampfungsbrenner für ein Heizgerät bekannt, bei dem eine Stabglühkerze als Zündeinrichtung vorgesehen ist, die den Träger und den saugfähigen Körper durchsetzt, über diesen übersteht und in die Brennkammer ragt.

Aus DE-PS 32 33 319 ist ein letzterem ähnlicher Verdampfungsbrenner bekannt, bei dem eine Glühzündeinrichtung von einem im wesentlichen ebenen Glühheizkörper aus Glühdraht gebildet wird, der parallel zur Abdampfungsfläche unmittelbar vor oder in einem Verdampfungskörper angeordnet ist.

Bei den drei letztgenannten Verdampfungsbrennern werden Glühzündeinrichtungen eingesetzt, welche in die Brennkammer ragen, so daß eine derartige Glühzündeinrichtung aufgrund der dort herrschenden hohen Temperaturen eine verkürzte Lebensdauer hat und zudem die Brennluft- und Brennstoffströmungen in der Brennkammer stört.

Der Erfindung liegt die Aufgabe zugrunde, einen Verdampfungsbrenner der gattungsgemäßen Art bereitzustellen, der bei zuverlässigem Startverhalten und schadstoffarmem, verbrauchsgünstigem Brennerbetrieb auch eine Verlängerung der Lebensdauer der Zündeinrichtung ermöglicht.

Nach der Erfindung wird diese Aufgabe mit einem Verdampfungsbrenner für ein mit flüssigem Brennstoff betriebenes Heizgerät, insbesondere Fahrzeugzusatzheizgerät, gelöst, welcher die Merkmale des Patentanspruchs 1 aufweist.

Beim erfindungsgemäßen Verdampfungsbrenner verdampft der Brennstoff nur über die Öffnung des Trägers in die Kammer in der Nähe der Zündeinrichtung. Nach der Zündung des in der Kammer gebildeten Gemisches aus Brennluft und verdampftem Brennstoff unter Verwendung der Zündeinrichtung wird in der vom Gehäuse begrenzten Kammer eine Zündflamme erzeugt, die durch die wenigstens eine Durchgangsöffnung durchschlägt und hierdurch die Verbrennung in der Brennkammer einleitet. Sobald die Verbrennung in der Brennkammer selbsttätig weiterläuft, wird die Zündeinrichtung abgeschaltet, wobei die Zündflamme erlischt und die Zündeinrichtung somit keiner weiteren Beanspruchung durch hohe Temperaturen oder Verbrennungsrückstände ausgesetzt ist.

Vorzugsweise liegt die Brennluftzufuhröffnung der Öffnung zum Abdampfen gegenüber, so daß sich die zugeführte Brennluft örtlich konzentriert um die Zündeinrichtung herum mit dem vom saugfähigen Körper abgedampften Brennstoff in der Kammer vermischen kann, so daß ein für die Zündung günstiges Gemischverhältnis innerhalb kurzer Zeit zu erreichen ist.

Aus fertigungstechnischen Gründen hat es sich insbesondere als zweckmäßig erwiesen, das Gehäuse für die Zündeinrichtung in ein oberes Gehäuseteil, das ein separates Bauteil darstellt, und ein unteres Gehäuseteil zu unterteilen, das im Bereich des Trägers liegt. Hierdurch können fertigungstoleranzbedingte Schwierigkeiten überwunden werden und insbesondere kann das obere Gehäuseteil eng an der Zündeinrichtung anliegen und das untere Gehäuseteil bildet einen erweiterten Innenraum, um dort eine Vorvermischung von Brennstoffdampf und Brennluft für die Erzeugung einer Zündflamme vorzunehmen. Um zu gewährleisten, daß Brennluft in die Kammer um die Zündeinrichtung lediglich über die wenigstens eine Brennluftzufuhröffnung und keine sogenannte Falschluft in die Kammer eintritt, sind der obere Gehäuseteil und der untere Gehäuseteil an ihrem Übergangsbereich abgedichtet.

Gemäß einer vorteilhaften Ausgestaltungsform nach der Erfindung sind der Verdampfungsbrenner und die Zündeinrichtung von einem topfförmigen Gehäuseteil umgeben, das zur Verringerung von Dichtungsschwierigkeiten vorzugsweise über eine einzige Flanschverbindung mit dem Brennrohr der Brennkammer verbunden ist.

In vorteilhafter Weise bildet die Zündeinrichtung mit dem topfförmigen Gehäuseteil eine Einheit, die auch den Träger mit dem saugfähigen Körper einschließt, so daß die insgesamt funktionswesentlichen Teile des Verdampfungsbrenners schnell und einfach durch Ersetzen des topfförmigen Gehäuseteils mit den hiermit zu einer Einheit verbundenen Einrichtungen im Bedarfsfall ausgewechselt werden können.

Durch eine Anordnung der Zündeinrichtung etwa parallel zur Fläche des Trägers wird eine kompakte Bauweise des Heizgeräts ermöglicht. Ferner kann bei dieser Anordnung die Kammer, in die die Zündeinrichtung hineinragt, sehr klein gehalten werden, wodurch eine schnelle Erwärmung und somit eine gute Verdampfung des Brennstoffs in Vorbereitung des Zündvorgangs erreicht werden.

Bei einer Verwendung einer Stablühkerze als Zündeinrichtung wird eine besonders vorteilhafte schnelle Erwärmung der Kammer erreicht, in der das zündfähige Gemisch für den Zündvorgang in der Startphase gebildet wird.

Ferner kann auch das die Stabglühkerze umgebende Gehäuse mit dieser eine Einheit bilden, die in radialer Richtung ausgebaut werden kann, ohne das Heizgerät zu zerlegen. Hierdurch erhält man eine sehr wartungsfreundliche Ausgestaltungsform.

Die Erfindung wird nachstehend an einem Beispiel unter Bezugnahme auf die Zeichnung näher erläutert. Darin zeigt:

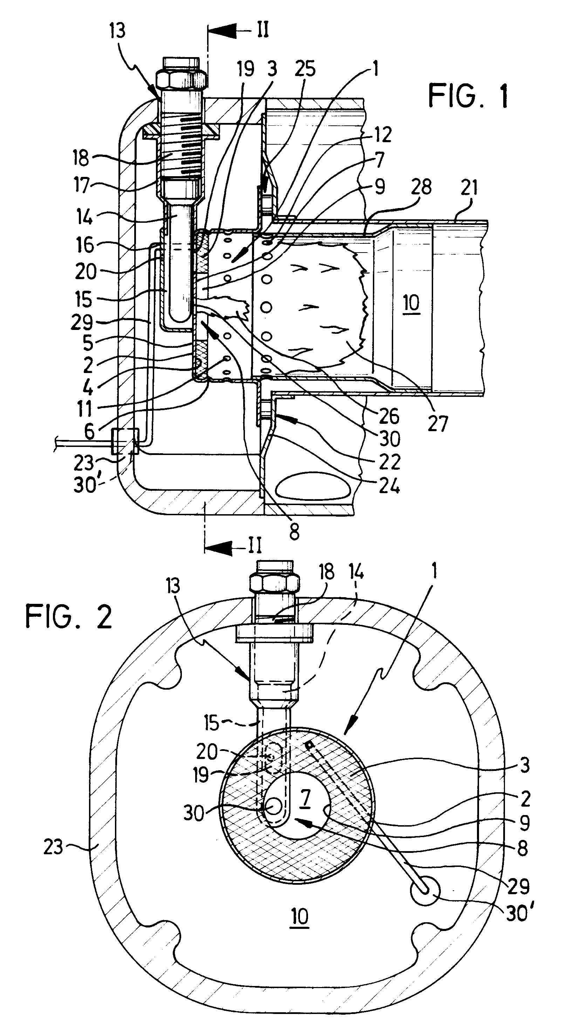

Fig. 1
eine Längsschnitteilansicht eines Verdampfungsbrenners,
Fig. 2
eine Schnittansicht längs der Linie II-II in Fig. 1,
Fig. 3 und Fig. 4
Ansichten einer Ausführungsvariante entsprechend Fig. 1 und 2.

In den Figuren der Zeichnung ist lediglich der Bereich eines Heizgeräts, der die Brennereinrichtung enthält, dargestellt, während alle übrigen Teile des Heizgeräts von an sich üblicher Bauart sein können.

Ein Verdampfungsbrenner ist insgesamt mit 1 bezeichnet, der einen Träger 2 für einen mit flüssigem Brennstoff über eine Brennstoffleitung 29 beaufschlagbaren, saugfähigen Körper 3 aufweist. Die Brennstoffleitung 29 ist mittels einer Tülle 30' durch ein Gehäuseteil des Heizgerätes durchgeführt. Der saugfähige Körper 3 ist auf der einer Brennkammer zugewendeten Vorderseite 4 des Trägers 2 auf übliche Weise angebracht, wobei in axialer Richtung der saugfähige Körper 3 beim dargestellten Beispiel durch eine Durchmessereinschnürung 6 festgelegt ist. Der saugfähige Körper 3 hat zweckmäßigerweise, bei beispielsweise mit Diesel als Brennstoff betriebenen Heizgeräten, wenigstens in seinem Mittelbereich 8 eine Öffnung 9, so daß die Vorderseite 4 des Trägers 2 einen freigelegten Teil 7 besitzt. In einem Abstand vom saugfähigen Körper 3 in Richtung einer Brennkammer 10 sind Öffnungen 11 und 12 für den Durchtritt von Brennluft vorgesehen, die beim dargestellten Beispiel in zwei konzentrischen, beabstandeten Lochreihen angeordnet sind. Von einer nicht dargestellten Brennluftzufuhreinrichtung gelangt über diese Öffnungen 11,12, Brennluft in die Brennkammer 10.

Eine Zündeinrichtung 13, die beim dargestellten Beispiel von einer Stabglühkerze gebildet wird, ist in einer Kammer 15 auf einer von der Brennkammer 10 abgewendeten Rückseite 5 des Trägers 2 angeordnet. Die Kammer 5 wird von einem unteren Gehäuseteil 16 begrenzt und ein Teil der Gehäusewand wird von der Rückseite 5 des Trägers 2 gebildet. Zwischen der Zündeinrichtung 13 und der Kammer 5 ist ein Abstand vorhanden, der größer als der Löschabstand der Zündeinrichtung 13 ist. An das untere Gehäuseteil 16 schließt sich ein oberes Gehäuseteil 17 an, das die Zündeinrichtung 13 umgibt und in das ein Schraubgewinde 18 der Zündeinrichtung 13 eingeschraubt ist. Der Übergang von oberem Gehäuseteil 17 zum unteren Gehäuseteil 16 und/oder zu der Rückseite 5 des Trägers 2 ist dicht abgeschlossen, so daß keine Brennluft an dieser Stelle in die Kammer 15 eintreten kann. Auf der Rückseite 5 des Trägers 2 ist in dem Teil, der von dem saugfähigen Körper 3 bedeckt ist, wenigstens eine Öffnung 19 vorgesehen. Dieser Öffnung 19 in etwa gegenüberliegend ist im unteren Gehäuseteil 16 eine Brennluftzufuhröffnung 20 vorgesehen. Im freigelegten Teil 7 des Trägers 2 ist ferner eine Durchgangsöffnung 30 vorgesehen. Diese Durchgangsöffnung 30 mündet direkt in die Brennkammer 10.

Die Brennkammer 10 wird von einem Brennrohr 21 begrenzt, das über eine Flanschverbindung 22 mit einem topfförmig ausgebildeten Gehäuseteil 23 verbunden ist, das die Zündeinrichtung 13 mit den oberen und unteren Gehäuseteilen 16, 17 und dem Träger 2 mit dem saugfähigen Körper 3 trägt. Diese vorstehend genannten Teile bilden zweckmäßigerweise eine einheitlich zu handhabende Einheit. Im Bereich der Flanschverbindung 22 begrenzt zweckmäßigerweise ein Flansch 24 des Brennrohrs 21 einen Durchtrittsspalt 25, durch den Brennluft treten und über die Öffnungen 12 beispielsweise in die Brennkammer 10 eingeleitet werden kann. Durch die Öffnungen 12 läßt sich die Luftverteilung präzise bestimmen.

Der vorstehend anhand den Fig. 1 und 2 erläuterte Verdampfungsbrenner 1 arbeitet auf die nachstehend näher beschriebene Weise.

Bei eingeschalteter Zündeinrichtung 13 wird dem saugfähigen Körper 3 über eine nicht näher dargestellte Brennstoffzufuhreinrichtung und eine Brennstoffleitung 29 flüssiger Brennstoff zugeführt. Dieser flüssige Brennstoff dampft über die Öffnung 19 in der Rückseite 5 des Trägers 2 in die Kammer 15 um die Zündeinrichtung 13 ab. Die über die Brennluftzufuhröffnung 20 von einer nicht näher dargestellten Luftzufuhreinrichtung, wie Z.B. einem Gebläse, zugeführte Brennluft tritt ebenfalls in die Kammer 15 um die Zündeinrichtung 13 ein und vermischt sich mit dem darin befindlichen verdampften Brennstoff. Wenn die Zündeinrichtung 13 die vorbestimmte Zündtemperatur erreicht, wird dieses so in der Kammer 15 gebildete brennbare Gemisch gezündet und es bildet sich eine Zündflamme 26, die über die Durchgangsöffnung 30 im Träger 2 sich in Richtung der Brennkammer 10 erstreckt. Da der Brennstoff von dem saugfähigen Körper 3 auch auf der der Brennkammer 10 zugewendeten Vorderseite 4 des Trägers abdampft und ein auf dem freiliegenden Teil 7 gebildeter Brennstofffilm durch die Zündeinrichtung an dem Träger 2 aufgewärmt wird, bildet sich in Verbindung mit der über die Öffnungen 11, 12 zugeführten Brennluft auch in der Brennkammer 10 ein zündwilliges Gemisch. Dieses wird mit Hilfe der Zündflamme 26 in der Brennkammer 10 gezündet. Somit entsteht in der Brennkammer 10 eine Flamme 27 und die Verbrennung in der Brennkammer 10 ist über die Zündflamme 26 eingeleitet. Wenn die Verbrennung des Brenngemisches in der Brennkammer 10 eine zeitlang gleichmäßig abläuft, wird die Zündeinrichtung 13 abgeschaltet und die Zündflamme 26 erlischt.

Da bei dem insgesamt mit 1 bezeichneten Verdampfungsbrenner die Zündeinrichtung 13 außerhalb der Brennkammer 10 liegt, ist die Zündrichtung 13 nicht den hohen Temperaturen der Brennkammer 10 und auch nicht der Flamme 27 in der Brennkammer ausgesetzt, so daß sie eine beträchtlich längere Lebensdauer hat und daher weniger Störungen des Heizgeräts, bedingt durch die Zündeinrichtung 13, auftreten können. Da ferner beim dargestellten Beispiel die Zündeinrichtung 13 nicht in die Brennkammer 10 ragt, erhält man auch ungestörte gleichmäßige Strömungsverhältnisse in der Brennkammer 10, wodurch sich ein günstiger Verbrennungsablauf erreichen läßt. Da ferner in einem örtlich begrenzten Raum in der Kammer 15 um die Zündeinrichtung 13 relativ schnell nach Einschalten ein zündwilliges Gemisch sich aufbereiten läßt, wird die Zündflamme 26 schnell erzeugt und von der Zündeinrichtung 13 braucht nicht die gesamte Brennkammer 10 auf die erforderliche Zündtemperatur aufgewärmt zu werden. Hierdurch ergeben sich auch Energieeinsparungen beim Betreiben der Zündeinrichtung 13.

Ferner werden auch Dichtungsprobleme zwischen Brennkammer 10 bzw. Brennrohr 21 und dem Bereich um den Träger 2 dadurch überwunden, daß nur eine einzige Flanschverbindung 22 zwischen dem Brennrohr 21 in der Ebene einer der Lochreihen mit den Öffnungen 11 oder 12 und dem den Verdampfungsbrenner 1 umgebenden topfförmigen Gehäuseteil 23 vorhanden ist. Da ferner das topfförmige Gehäuseteil 23 alle funktionswesentlichen Teile des Verdampfungsbrenners 1, wie die Zündeinrichtung 13, den Träger 2 mit dem saugfähigen Körper 3 und dergleichen trägt, ist ein Heizgerät mit einem solchen Verdampfungsbrenner 1 auch wartungsfreundlich, da im Bedarfsfalle lediglich das topfförmige Gehäuseteil 23 mit den mit dieser eine Einheit bildenden Teilen abgenommen zu werden braucht und dann leicht und schnell durch ein entsprechend neues Teil ersetzt werden kann.

Obgleich nicht näher dargestellt ist, können auch die Öffnungen 11, 12 sowie das entsprechende zugeordnete Teil, das man als Brennrohreinsatz 28 bezeichnen kann, entfallen, so daß Brennluft in die Brennkammer 10 lediglich über den Durchtrittsspalt 25 eintritt. Ferner sind natürlich auch noch weitere Abänderungen dahingehend möglich, daß Z.B. der Flansch 24 des Brennrohrs 21 im nicht näher in den Figuren der Zeichnung dargestellten Wärmeübertrager befestigt ist. In Abhängigkeit von dem Leistungsbedarf und der hierdurch vorgegebenen Größe der Zündeinrichtung 13 kann die in der Zeichnung dargestellte Kammer 15 auch von einer muldenförmigen Vertiefung im Träger 2 hinter dem saugfähigen Körper 3 gebildet werden. Der Träger 2 und die Gehäuseteile 16, 17, die die Kammer 15 begrenzen, sind zweckmäßigerweise fest miteinander beispielsweise durch Löten oder Schweißen verbunden.

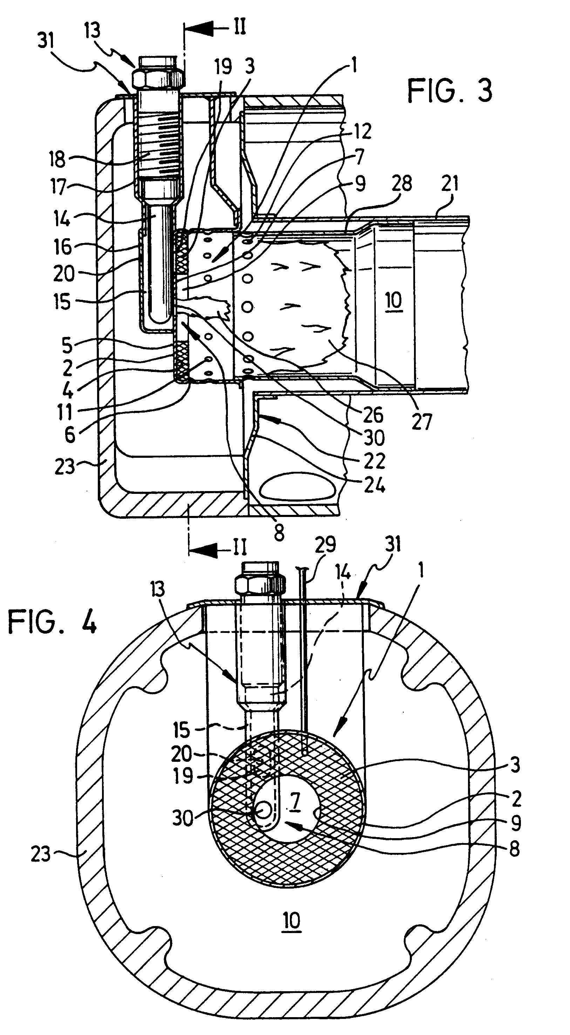

Wie in den Fig. 3 und 4 eingetragen ist, kann das Gehäuse 16,17 um die Zündeinrichtung 13 mit der Zündeinrichtung 13 eine Einheit 31 bilden, die sich zur Reparatur radial aus dem topfförmigen Gehäuseteil 23 herausnehmen läßt, ohne daß das Heizgerät auseinandergebaut zu werden braucht. Gleiche oder ähnliche Teile sind mit den solben Bezugszeichen wie in Fig. 1 und 2 versehen.

Bezugszeichenliste

| 1 | Verdampfungsbrenner insgesamt |
|---|---|
| 2 | Träger |
| 3 | Saugfähiger Körper |
| 4 | Vorderseite von Träger 2 |
| 5 | Rückseite von Träger 2 |

| 6 | Durchmessereinschnürung |
| 7 | Freigelegter Teil von Träger 2 |
| 8 | Mittelbereich |
| 9 | Öffnung auf Rückseite 5 |
| 10 | Brennkammer |
| 11 | Öffnung |
| 12 | Öffnung |
| 13 | Zündeinrichtung |
| 14 | Stabglühkerze |
| 15 | Kammer |
| 16 | Unteres Gehäuseteil |
| 17 | Oberes Gehäuseteil |
| 18 | Schraubgewinde der Zündeinrichtung 13 |
| 19 | Öffnung für verdampften Brennstoff |
| 20 | Brennluftzufuhröffnung |
| 30 | Durchgangsöffnung |
| 21 | Brennrohr |
| 22 | Flanschverbindung |
| 23 | Topfförmiges Gehäuseteil |
| 24 | Flansch von Brennrohr |
| 25 | Durchtrittsspalt |
| 26 | Zündflamme |
| 27 | Flamme in Brennkammer 10 |
| 28 | Brennrohreinsatz |
| 29 | Brennstoffleitung |
| 30' | Tülle |
| 31 | Einheit aus Zündeinrichtung 13 und Gehäuse 16,17 |

**Patentansprüche**

1. Verdampfungsbrenner für ein mit flüssigem Brennstoff betriebenes Heizgerät, insbesondere Fahrzeugzusatzheizgerät, mit einer von einem Brennrohr (21) begrenzten Brennkammer (10), in der ein mit flüssigem Brennstoff beaufschlagbarer, saugfähiger Körper (3) angeordnet ist, der mit wenigstens einer Öffnung (9) versehen ist, mit einer Brennluftzufuhreinrichtung und mit einer Zündeinrichtung (13) für ein Gemisch aus verdampftem Brennstoff und Brennluft, welche hinter der von der Brennkammer (10) abgewendeten Rückseite des saugfähigen Körpers (3) in einer von einem Gehäuse (16, 17) begrenzten Kammer (15) angeordnet ist, das wenigstens eine in die Kammer (15) mündende Brennluftzufuhröffnung (20) hat, dadurch **gekennzeichnet,** daß der saugfähige Körper (3) auf der der Brennkammer (10) abgewandten Rückseite zum überwiegenden Teil von einem Träger (2) abgedeckt wird, der in diesem Bereich wenigstens eine Öffnung (19) zum Abdampfen des Brennstoffs in die Kammer (15) hat und der außerdem im Bereich der Öffnung (9) eine Durchgangsöffnung (30) für den Durchtritt einer in der Kammer (15) gebildeten Zündflamme (26) in Richtung der Brennkammer (10) aufweist.

2. Verdampfungsbrenner nach Anspruch 1, dadurch gekennzeichnet, daß die Brennluftzufuhröffnung (20) der Öffnung (19) des Trägers (2) gegenüberliegt.

3. Verdampfungsbrenner nach Anspruch 1 oder 2, dadurch gekennzeichnet, daß eine Gehäusewand der Kammer (15) von der Rückseite (5) des Trägers (2) gebildet wird.

4. Verdampfungsbrenner nach einem der Ansprüche 1 bis 3, dadurch gekennzeichnet, daß sich das Gehäuse (16, 17) bis zum Einschraubgewinde (18) der Zündeinrichtung (13) erstreckt.

5. Verdampfungsbrenner nach Anspruch 4, dadurch gekennzeichnet, daß der die Zündeinrichtung (13) bis zum Einschraubgewinde (18) umgebende obere Gehäuseteil (17) ein separates Bauteil bildet.

6. Verdampfungsbrenner nach Anspruch 5, dadurch gekennzeichnet, daß der obere Gehäuseteil (17) am Übergang zum im Bereich des Trägers (2) liegenden unteren Gehäuseteil (16) abgedichtet ist.

7. Verdampfungsbrenner nach einem der vorangehenden Ansprüche, dadurch gekennzeichnet, daß der Verdampfungsbrenner (1) und die Zündeinrichtung (13) von einem topfförmig ausgebildeten Gehäuseteil (23) umgeben sind.

8. Verdampfungsbrenner nach Anspruch 7, dadurch gekennzeichnet, daß das topfförmige Gehäuseteil (23) und das Brennrohr (21) über eine einzige Flanschverbindung (22) verbunden sind.

9. Verdampfungsbrenner nach Anspruch 8, dadurch gekennzeichnet, daß der Flansch (24) des Brennrohrs (21) einen Durchtrittsspalt (25) für Brennluft begrenzt.

10. Verdampfungsbrenner nach einem der Ansprüche 7 bis 9, dadurch gekennzeichnet, daß die Zündeinrichtung (13) mit dem topfförmigen Gehäuseteil (23) eine Einheit bildet.

11. Verdampfungsbrenner nach einem der vorangehenden Ansprüche, dadurch gekennzeichnet, daß die Zündeinrichtung (13) etwa parallel zur Trägerfläche angeordnet ist.

12. Verdampfungsbrenner nach einem der vorangehenden Ansprüche, dadurch gekennzeichnet, daß die Zündeinrichtung (13) eine Stabglühkerze (14) ist.

13. Verdampfungsbrenner nach einem der Ansprüche 2 bis 12, dadurch gekennzeichnet, daß das die Kammer (15) begrenzende Gehäuse (16, 17) und die Zündeinrichtung (13) eine aus dem Heizgerät radial ausbaubare Einheit bildet.

## Claims

1. Vaporization burner for a heater operated with liquid fuel and in particular a motor vehicle auxiliary heater, with a combustion chamber (10) bounded by a combustion pipe (21) in which is arranged an absorbent body (3) exposed to the action of the liquid fuel and which is provided with at least one opening (9), with a combustion air supply device and with an igniter (13) for a mixture of vaporized fuel and combustion air, which is located behind the back of the absorbent body (3) remote from the combustion chamber (10) in a chamber (15) bounded by a casing (16, 17) and which has at least one combustion air supply opening (20) issuing into the chamber (15), characterized in that the absorbent body (3) is covered on the back remote from the combustion chamber (10) largely by a carrier (2), which in this area has at least one opening (19) for vaporizing the fuel in the chamber (15) and which also has in the vicinity of the opening (9) a passage opening (30) for the passage in the direction of the combustion chamber (10) of an ignition flame (26) formed in the chamber (15).

2. Vaporization burner according to claim 1, characterized in that the combustion air supply opening (20) faces the opening (19) of the carrier (2).

3. Vaporization burner according to claims 1 or 2, characterized in that a casing wall of the chamber (15) is formed by the back (5) of the carrier (2).

4. Vaporization burner according to one of the claims 1 to 3, characterized in that the casing (16, 17) extends up to the screw thread (18) of the igniter (13).

5. Vaporization burner according to claim 4, characterized in that the upper casing part (17) surrounding the igniter (13) up to the screw thread (18) forms a separate component.

6. Vaporization burner according to claim 5, characterized in that the upper casing part (17) is sealed at the transition to the lower casing part (16) located in the vicinity of the carrier (2).

7. Vaporization burner according to one of the preceding claims, characterized in that the vaporization burner (1) and the igniter (13) are surrounded by a cup-shaped casing part (23).

8. Vaporization burner according to claim 7, characterized in that the cup-shaped casing part (23) and the combustion pipe (21) are connected by means of a single flanged connection (22).

9. Vaporization burner according to claim 8, characterized in that the flange (24) of the combustion pipe (21) bounds a combustion air passage gap (25).

10. Vaporization burner according to one of the claims 7 to 9, characterized in that the igniter (13) forms a unit with the cup-shaped casing part (23).

11. Vaporization burner according to one of the preceding claims, characterized in that the igniter (13) is positioned roughly parallel to the carrier surface.

12. Vaporization burner according to one of the preceding claims, characterized in that the igniter (13) is a rod-shaped heater plug (14).

13. Vaporization burner according to one of the claims 2 to 12, characterized in that the casing (16, 17) bounding the chamber (15) and the igniter (13) form a unit which can be removed radially from the heater.

## Revendications

1. Brûleur à vaporisation pour un appareil de chauffage fonctionnant avec un carburant liquide, notamment un appareil de chauffage additionnel de véhicule qui comprend une chambre de combustion (10) délimitée par un tube de combustion (21), dans laquelle on implante un corps aspirant (3) alimenté en carburant liquide, qu'on munit d'au moins un orifice (9) avec un dispositif d'introduction d'air comburant et avec un dispositif d'allumage (13) pour un mélange de carburant vaporisé et d'air comburant, qu'on implante derrière la paroi dorsale tournée à l'opposé de la chambre de combustion (10) du corps aspirant (3) dans une chambre (15) délimité par un boîtier (16, 17) qui a au moins un orifice d'introduction d'air comburant (20) débouchant dans la chambre (15), brûleur à vaporisation caractérisé en ce que le corps aspirant (3) est recouvert en grande partie sur la face dorsale opposée à la chambre de combustion (10) par un support (2) qui, dans cette zone, présente au moins un orifice (19) pour vaporiser le carburant dans la chambre (15) et qui présente en outre dans le domaine de l'orifice (9) un orifice d'entrée (30) pour le passage d'une flamme d'allumage (26) formée dans la chambre (15) dans la direction de la chambre de combustion (10).

2. Brûleur à vaporisation selon la revendication 1, caractérisé en ce que l'orifice d'introduction d'air comburant (20) est en face de l'orifice (19) du support (2).

3. Brûleur à vaporisation selon la revendication 1 ou 2, caractérisé en ce qu'une paroi de boîtier de la chambre (15) est formée par la face arrière (5) du support (2).

4. Brûleur à vaporisation selon l'une des revendications 1 à 3, caractérisé en ce que le boîtier (16, 17) s'étend jusqu'au filetage (18) du dispositif d'allumage (13).

5. Brûleur à vaporisation selon la revendication 4, caractérisé en ce que la pièce de boîtier (17) supérieure entourant le dispositif d'allumage (13) jusqu'au filetage (18) forme une pièce constitutive séparée.

6. Brûleur à vaporisation selon la revendication 5, caractérisé en ce qu'on rend étanche la pièce de boîtier supérieure (17) à sa transition avec la pièce de boîtier inférieure (16) se trouvant dans la zone du support (2).

7. Brûleur à vaporisation selon l'une des revendications précédentes, caractérisé en ce que le brûleur à vaporisation (1) et le dispositif d'allumage (13) sont entourés d'une pièce de boîtier en forme de pot (23).

8. Brûleur à vaporisation selon la revendication 7, caractérisé en ce que la pièce de boîtier en forme de pot (23) et le tube de combustion (21) sont reliés par une seule fixation par bride (22).

9. Brûleur à vaporisation selon la revendication 8, caractérisé en ce que la bride (24) du tube de combustion (21) délimite une fente de passage (25) pour l'air comburant.

10. Brûleur à vaporisation selon l'une des revendications 7 à 9, caractérisé en ce que le dispositif d'allumage (13) forme une unité avec la pièce de boîtier en forme de pot (23).

11. Brûleur à vaporisation selon l'une des revendications précédentes, caractérisé en ce que le dispositif d'allumage (13) est placé à peu près parallèlement à la surface du support.

12. Brûleur à vaporisation selon l'une des revendications précédentes, caractérisé en ce que le dispositif d'allumage (13) est une bougie de réchauffage en baguette (14).

13. Brûleur à vaporisation selon l'une des revendications 2 à 12, caractérisé en ce que le boîtier (16, 17) délimitant la chambre (15) et le dispositif d'allumage (13), forme une unité démontable radialement de l'appareil de chauffage.

FIG. 1

FIG. 2

FIG. 3

FIG. 4